Europäisches Patentamt

(19) European Patent Office

Office européen des brevets

(11) Veröffentlichungsnummer: **0 106 386**

**A2**

(12) # EUROPÄISCHE PATENTANMELDUNG

(21) Anmeldenummer: **83201319.7**

(22) Anmeldetag: **14.09.83**

(51) Int. Cl.³: **G 09 G 3/36**
**G 02 F 1/137**

(30) Priorität: **23.09.82 DE 3235143**
**24.05.83 EP 83105107**

(43) Veröffentlichungstag der Anmeldung:
**25.04.84 Patentblatt 84/17**

(84) Benannte Vertragsstaaten:
**CH DE FR GB LI**

(71) Anmelder: **BBC Aktiengesellschaft Brown, Boveri & Cie.**
**Haselstrasse**
**CH-5401 Baden(CH)**

(72) Erfinder: **Amstutz, Hermann**
**Bruggerstrasse 13**
**CH-5507 Mellingen(CH)**

(72) Erfinder: **Kaufmann, Meinolph**
**Moosstrasse 11**
**CH-5406 Baden(CH)**

(72) Erfinder: **Scheffer, Terry J., Dr.**
**Höhenstrasse 4**
**CH-8127 Forch(CH)**

(54) Verfahren zur Ansteuerung einer multiplexierbaren, bistabilen Flüssigkristallanzeige.

(57) Bei einem Verfahren zur Ansteuerung einer multiplexierbaren, bistabilen Flüssigkristallanzeige wird eine erste Betriebsspannung ($V_1$), die grösser ist als eine erste Grenzspannung ($V_{g1}$) an die ausgewählten Anzeige-Elemente angelegt und eine zweite Betriebsspannung ($V_2$), die kleiner ist als eine zweite Grenzspannung ($V_{g2}$), an die nichtausgewählten Anzeige-Elemente. Bei der ersten Betriebsspannung ($V_1$) ist nur ein erster optischer Zustand (Z1) stabil, bei der zweiten Betriebsspannung ($V_2$) nur ein zweiter optischer Zustand (Z2). Alle Anzeige-Elemente können über einen einzigen Schreibspannungspuls gleichzeitig zur Anzeige gebracht werden. Dadurch wird eine kontrastreiche, stete und sofortige Anzeige der gesamten Anzeigefläche erreicht. Ein zeilenweises Schreiben ist jedoch auch möglich. Zudem wird eine auf den Bistabilitätseffekt beruhende Flüssigkristallanzeige vorgestellt mit einem Gast-Wirt-Flüssigkristall (30), der einen chiralen Zusatz enthält. Die Schichtdicke (d) des Flüssigkristalls (30) ist kleiner als 10 $\mu$m und das Verhältnis von Schichtdicke (d) und Ganghöhe (p) des Gast-Wirt-Flüssigkristalls (30) liegt zwischen 0,5 und 1,75. Verteilt über den ganzen Sichtbereich sind Abstandshalter (24) vorgesehen.

FIG.1

FIG. 5

112/83

12.9.83
Sp/SC

- 1 -

## Verfahren zur Ansteuerung einer multiplexier-
## baren, bistabilen Flüssigkristallanzeige

Die Erfindung bezieht sich auf ein Verfahren nach dem Oberbegriff des Anspruchs 1 und auf eine Flüssigkristallanzeige nach dem Oberbegriff des Patentanspruchs 10. Ein solches Verfahren ist bekannt aus US-A-4 317 115, und eine solche Flüssigkristallanzeige aus US-A- 4 272 162.

Eine bistabile Flüssigkristallanzeige unterscheidet sich von der üblichen Flüssigkristallanzeige durch ein Hystereseverhalten der Helligkeit-Spannungskurve. Das bedeutet, dass es in einem bestimmten Bereich der angelegten Betriebsspannung zwei mögliche optische Zustände gibt. Die Flüssigkristalle, die für eine solche Anzeige verwendet werden, bestehen beispielsweise aus einem nematischen Flüssigkristall mit einem chiralen Zusatz. Wird nun die obenerwähnte Betriebsspannung angelegt, so befindet sich der Flüssigkristall in einem von zwei optisch unterscheidbaren Zuständen, so dass die Anzeige z.B. entweder dunkel oder hell ist, je nachdem, auf welchem Zweig der Hystereseschleife sich das betreffende Anzeigeelement bei dem genannten Betriebsspannungswert befindet.

In US-A-4 317 115 wird von dem obengenannten Bistabilitätseffekt Gebrauch gemacht. Das dort beschriebene Ansteuerverfahren verwendet eine Haltespannung, bei welcher die Anzei-geelemente einer Flüssigkristallmatrixanzeige zwei verschie-dene optische Zustände (hell oder dunkel) annehmen können. Durch Anlegen einer Schreibspannung an bestimmte Elemente gehen diese Anzeigeelemente in den hellen optischen Zustand über. Dann wird die Haltespannung wieder angelegt und die betreffenden Anzeigeelemente verbleiben in diesem (hellen) Zustand. Dabei ist die Haltespannung der quadratische Mittelwert der an einem Anzeigeelement angelegten Spannungsdifferenz der Multiplexsignale. Da diese Haltespannung und die Schreibspannung bei einem hohen Multi-plexgrad sehr näh zusammenliegen müssen, ist der Kontrast bei dieser Betriebsspannung nicht besonders gut. Aus diesem Grunde ist die Anzeigefläche unterteilt in ein Schreibgebiet, das fünf Zeilen umfasst, und in ein Halte-Gebiet, das geschriebene und noch zu schreibende Zeilen umfasst. Die Anzeige-Elemente des Schreibgebietes liegen an einer höheren Haltespannung als die Anzeige-Elemente des Halte-Gebietes. Ueber .eine Schreibspannung, deren Amplitude grösser ist als die höhere Haltespannung, werden nur die ausgewählten Anzeige-Elemente in den optisch hellen Zustand versetzt. Die nicht-ausgewählten Anzeige-Elemente verbleiben in dem optisch dunklen Zustand.

Abgesehen vom schaltungstechnischen Aufwand, den die Unterteilung in die verschiedenen Gebiete mit sich bringt, hat das bekannte Verfahren den Nachteil, dass nur jeweils gebietsweise geschrieben werden kann. Dies geht relativ langsam, da die Anzeige-Elemente des Schreibgebietes zunächst auf die angelegte Betriebsspannung ansprechen müssen, bevor das nächste Gebiet geschrieben werden kann.

Ein zweiter erheblicher Nachteil besteht darin, dass die Anzeige beim bekannten Verfahren trotzdem keinen optimalen Kontrast vorweisen kann. Eingehende Untersuchungen haben ergeben, dass bei bestimmten Haltespannungen der optisch helle Zustand nach einiger Zeit spontan in den optisch dunklen Zustand übergeht, wobei die Speicherzeit von der Haltespannung abhängig ist. Insbesondere wird mit abnehmender Haltespannung die Speicherzeit des optisch hellen Zustandes kleiner. Die Anzeige muss deshalb ständig aufgefrischt werden, etwa alle zehn Sekunden, auch wenn die angezeigte Information weiter nicht geändert wird. Dadurch entstehen aber unerwünschte Flackererscheinungen.

Die in US-A-4 272 162 beschriebene Anzeige funktioniert nach dem Prinzip von White und Taylor (vgl. z.B. US-A-3 551 026) und besteht aus zwei parallelen durchsichtigen Trägerplatten, auf denen Elektrodenschichten und Orientierungsschichten angeordnet sind. Die Orientierung wird durch schräges Aufdampfen von SiO erhalten. Die Vorverkippung der Flüssigkristallmoleküle an den Orientierungsschichten beträgt 45°. Der eingefüllte Flüssigkristall besteht aus einer nematischen Flüssigkristallmischung mit positiver dielektrischer Anisotropie, aus einem pleochroitischen Farbstoff und einem chiralen Zusatz. Um den sogenannten "Speicher-Effekt" bei dieser Anzeige zu beheben, wird eine Dicke der Flüssigkristallschicht von etwa 10 µm und eine Ganghöhe von etwa 5,7 µm gewählt. Daraus ergibt sich ein Verhältnis von Dicke zu Ganghöhe von 1,75.

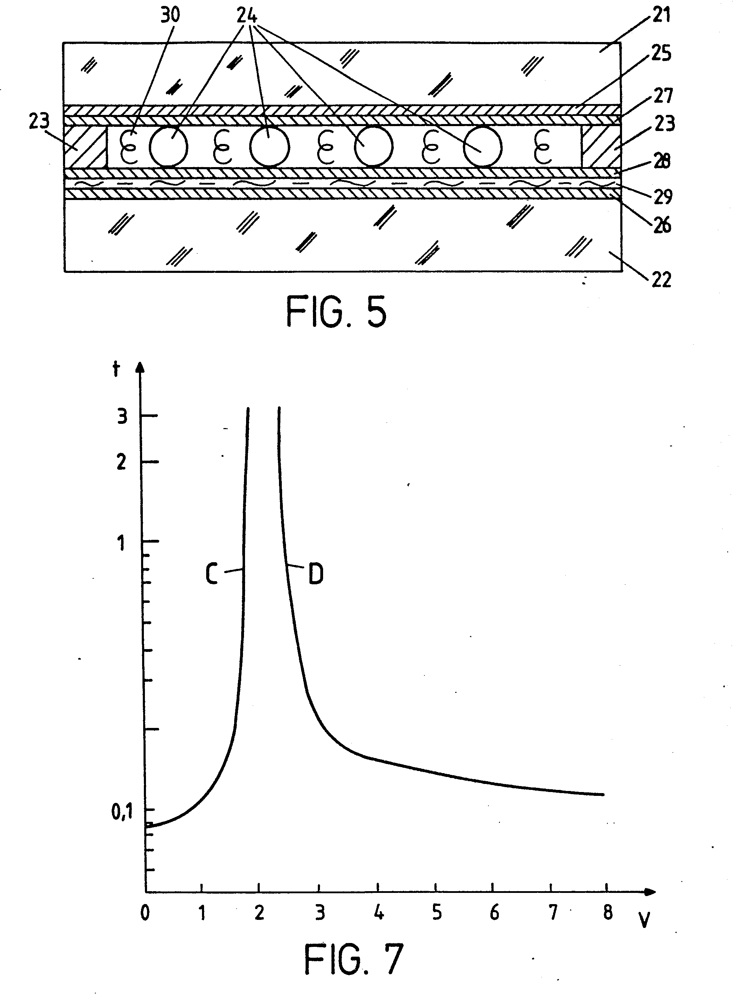

Aus J. Appl. Phys. Jahrgang 53, Nr. 12 (Dezember 1982), Seiten 8599 - 8606 ist eine Flüssigkristallanzeige mit zwei gekreuzten Polarisatoren bekannt, die auf dem Bistabilitäts-Effekt beruht. Diese Anzeige besitzt Trägerplatten mit Orientierungsschichten, die durch schräges Aufdampfen von SiO erzeugt sind. Die Vorverkippung der Flüssigkristallmoleküle beträgt etwa 55° mit der Trägerplattennormale. Die Flüssigkristallschicht hat eine Dicke von entweder 15,2 µm oder 15,7 µm. Der Flüssigkristall besteht aus einer Cyanobiphenyl-Mischung mit dem cholesterinischen Zusatz Cholesterin Nonanoat. Die Ganghöhe des Flüssigkristalls ist etwa gleich der Dicke der Schicht. Die Verdrehung der Flüssigkristallmoleküle zwischen der einen Trägerplatte und der anderen Trägerplatte beträgt 360°. Durch Anlegen einer Spannung oberhalb einer bestimmten Grenzspannung wird die Anzeige in einen optisch hellen Zustand versetzt. Dieser Zustand geht langsam in den optisch dunklen Zustand über, ein Prozess, der durch Staubpartikel oder andere Orientierungsstörungen entsteht und sich über die gesamte Anzeige ausbreitet. Dadurch verschwindet die Anzeige mit der Zeit (vgl. dort Fig. 5). Die Anzeige muss deshalb ständig in bestimmten Zeitabständen wieder aufgefrischt werden.

Die erwähnten Anzeigen sollen aus den obengenannten Gründen einen sehr genauen Plattenabstand besitzen, eine möglichst homogene Orientierung über den gesamten Platten aufweisen, und möglichst keine Staubpartikel oder sonstige Kondensationskerne im Zelleninneren enthalten. Da diese Forderung bedeutet, dass die Abstandshalter sich nur in der Umrandung der Anzeigezelle befinden dürfen, sind grossflächige Anzeigen kaum möglich, weil sehr dicke und extrem plane Trägerplatten aus Glas benötigt werden. Es versteht sich, dass dazu eine sehr aufwendige Herstellungstechnik erforderlich ist.

Der vorliegenden Erfindung, wie sie in den Patentansprüchen gekennzeichnet ist, liegt die Aufgabe zugrunde, das obengenannte Verfahren und die vorgenannte Flüssigkristallanzeige derart zu verbessern, dass die Information nicht mehr aufgefrischt werden muss, sondern dass eine sofortige, stete und kontrastreiche Anzeige der gesamten Anzeigefläche erreicht wird und dass eine grossflächige, einfach herstellbare, hochmultiplexierbare Anzeige unter Ausnutzung des Bistabilitätseffektes ermöglicht wird.

Der Erfindung liegt dabei die Erkenntnis zugrunde, dass es bei einer bistabilen Flüssigkristallanzeige Betriebsspannungen gibt, bei denen zwei verschiedene optische Zustände der Anzeige auftreten, jedoch nur einer dieser Zustände zeitlich stabil ist. Dies bedeutet, dass die Anzeige von einem ersten Zustand nach einer bestimmten Zeit, die von der angelegten Betriebsspannung und von Kondensationskernen im Zelleninneren der Flüssigkristallanzeige abhängig ist, in einen zweiten Zustand übergeht. Diese Eigenschaft bistabiler Flüssigkristalle wird von der Erfindung ausgenützt, wobei die Schaltzeit zwischen zwei verschiedenen optischen Zuständen hauptsächlich von der Speicherzeit des optisch metastabilen Zustandes bestimmt wird. Ferner wird von der Erfindung ausgenützt, dass der erste optische Zustand nur oberhalb einer ersten Grenzspannung und der zweite optische Zustand nur unterhalb einer zweiten Grenzspannung stabil sind. Um einen genügend hohen Multiplexgrad zu erreichen, ist es zudem wichtig, dass ein Verhältnis von Dicke zu Ganghöhe der Flüssigkristallschicht zwischen 0,5 und 1,75 gewählt wird.

Die Erfindung bietet den erheblichen Vorteil, dass nunmehr die gesamte Anzeigefläche einer Flüssigkristallanzeige mit Hysterese-Effekt gleichzeitig (d.h. seitenweise) zur Anzeige gebracht wird. Die alte Information wird mit einem Schreibspannungsimpuls gelöscht und die neue Information wird nach dem üblichen Multiplexverfahren, wie es bei nichtbistabilen Flüssigkristallanzeigen verwendet wird, zur Anzeige gebracht, so dass die Anzeige nicht mehr zeitlich aufgefrischt werden muss. Zudem wird ein optimaler Kontrast erreicht, da für die ausgewählten und die nichtausgewählten Anzeige-Elemente zwei verschiedene Betriebsspannungen verwendet werden. Ein solches Verfahren ist deshalb besonders geeignet für Videotext-Anwendungen oder für Speicheroszilloskope.

Die erfindungsgemässe Flüssigkristallanzeige ermöglicht nunmehr, das erfindungsgemässe Ansteuerverfahren optimal einzusetzen. Da es gerade sehr vorteilhaft ist, für ein schnelles Schalten der Anzeige, Abstandshalter über die ganzen Zellenplatten homogen zu verteilen, können nunmehr auch grossflächige und hochmultiplexierbare Flüssigkristallanzeigen mit Bistabilitätseffekt wirtschaftlich angefertigt werden.

Die Information bei einer Flüssigkristallanzeige mit Hysterese-Effekt kann auch zeilenweise geschrieben werden, ohne dass die angezeigte Information langsam verschwindet. Die neue Information wird zeilenweise mit einer Schreibspannung und nach dem üblichen Multiplexverfahren zur Anzeige gebracht, so dass eine zeitliche Auffrischung des Angezeigten überflüssig geworden ist. Ein solches Verfahren ist deshalb besonders geeignet für Anzeigen von Textverarbeitungssystemen und kleinen, tragbaren Computern.

Die Erfindung wird nun anhand der in den Zeichnungen dargestellten Beispiele näher erläutert. Dabei zeigt:

Fig. 1 den Graphen des prinzipiellen Verlaufs der Helligkeits-Spannungskurve einer bistabilen Flüssigkristallanzeige;

Fig. 2 eine Schaltungsanordnung mit zwei Flüssigkristallzellen zur Verdeutlichung der Wirkungsweise der Erfindung;

Fig. 3 das Blockschaltbild einer beispielsweisen Schaltungsanordnung zur Anwendung des erfindungsgemässen Ansteuerverfahrens für Multiplex-Betrieb;

Fig. 4 die Rechteckspannungen zur Erzeugung der Schreibspannung;

Fig. 5 einen Querschnitt durch eine erfindungsgemässe Flüssigkristallanzeige;

Fig. 6 den Graphen der Helligkeits-Spannungskurve einer
für das erfindungsgemässe Ansteuerverfahren hergestellten Flüssigkristallanzeige;

Fig. 7 einen Graphen, welcher die Abhängigkeit zwischen
Betriebsspannung und minimaler Schreibzeit der
vorgenannten Flüssigkristallanzeige zeigt;

Fig. 8a bis 8c
den Informationswechsel in einer Anzeigematrix
und die zugehörigen Taktsignale für die Zeilenelektroden;

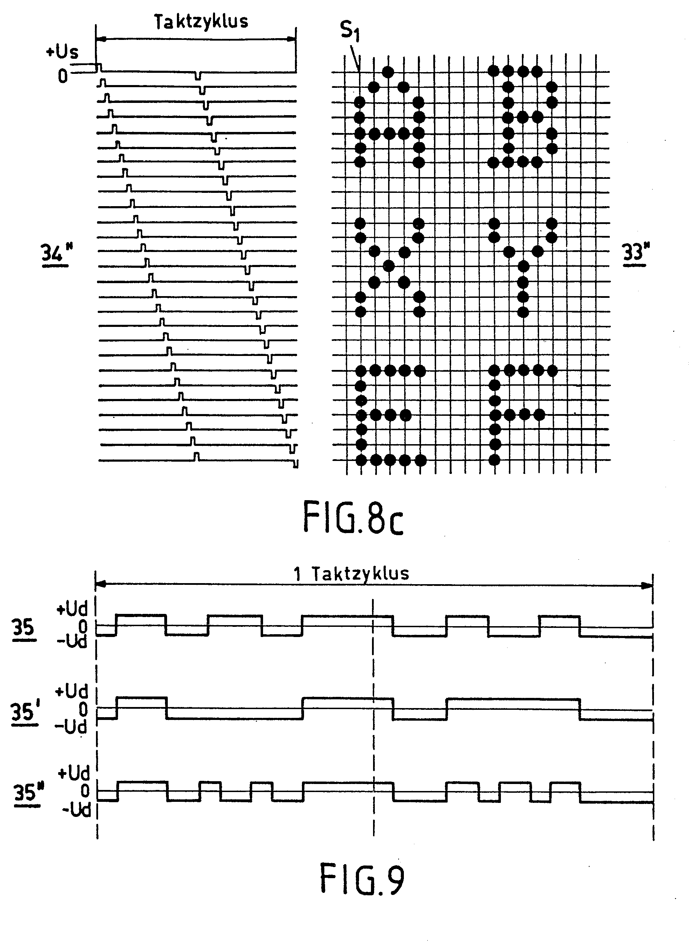

Fig. 9 Datensignale für die erste Spaltenelektrode für
drei verschiedene Anzeigen entsprechend den Fig.
8a, bis 8c;

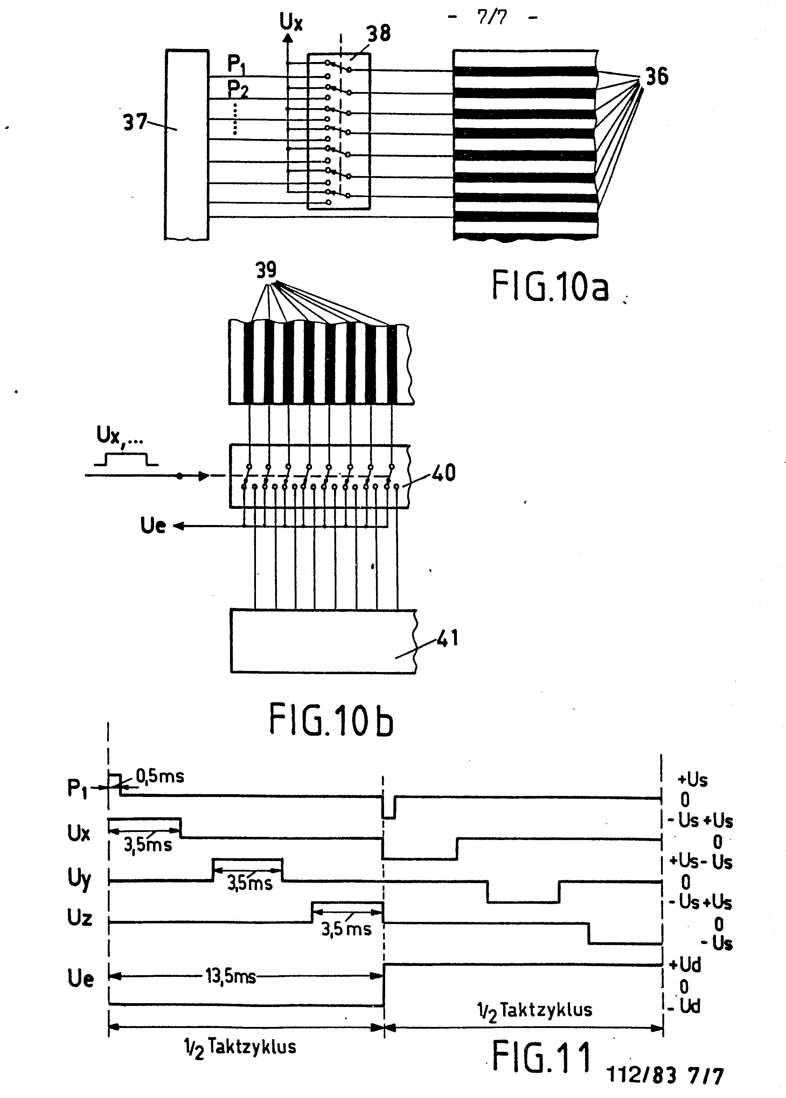

Fig. 10 einen Teil des Blockschaltbildes einer Schaltungsanordnung zur Anwendung des erfindungsgemässen
Ansteuerverfahrens, und

Fig. 11 ein Signaldiagramm der bei der Schaltungsanordnung
nach Fig. 10 angelegten Steuersignale.

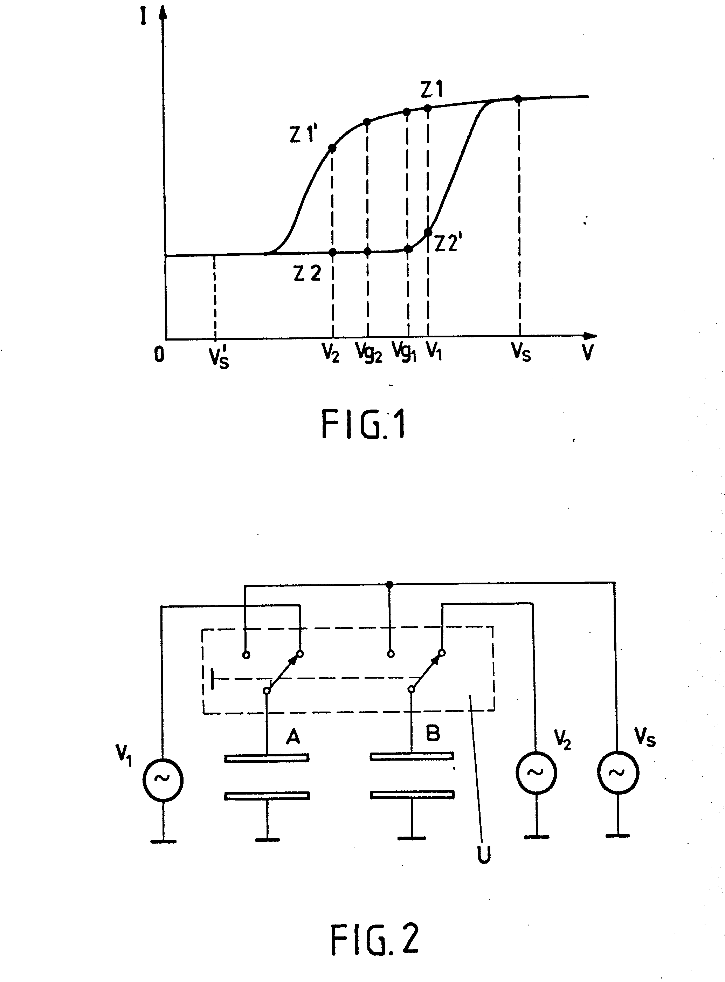

In Fig. 1 ist auf der Abszisse die Spannung $V_1$ und auf
der Ordinate die Intensität I der Helligkeit aufgetragen.
Im Bereich der Hystereseschleife weist die Anzeige bei
einer bestimmten Betriebsspannung einen von zwei möglichen
optischen Zuständen auf. Bei einer Betriebsspannung $V_1$
oberhalb einer Grenzspannung $Vg_1$ ist nur der erste optische
Zustand Z1 (hell) stabil. Der zweite optische Zustand
Z2' (dunkel) ist bei dieser Betriebsspannung metastabil
und geht daher nach einer bestimmten Zeit in den Zustand
Z1 über. Die Speicherzeit des metastabilen Zustandes ist
von der Betriebsspannung abhängig und ist umso kürzer,
je weiter die Betriebsspannung $V_1$ von der Grenzspannung $Vg_1$
entfernt ist. Bei einer Betriebsspannung $V_2$ unterhalb
der Grenzspannung $Vg_2$ ist nur der zweite optische Zustand Z2 (dunkel) stabil. Der erste Zustand Z1' (hell) ist hier metastabil und geht daher nach einer bestimmten Zeit in den Zustand Z2 über. Je weiter die Betriebsspannung $V_2$ von der Grenzspannung $Vg_2$ entfernt ist, desto kürzer ist die Speicherzeit des ersten optischen Zustandes Z1'. Durch Anlegen einer ausserhalb der Hystereseschleife liegenden Schreibspannung $V_s$ an ein Anzeigeelement und durch anschliessendes Anlegen einer Betriebsspannung $V_1$ oder $V_2$ wird das Anzeigeelement in einen definierten optischen Zustand Z1 oder Z2 versetzt. Es versteht sich, dass z.B. durch geeignete Wahl des Flüssigkristalls oder durch Verwendung von Polarisatoren auch der erste optische Zustand Z1 dunkel und der zweite optische Zustand Z2 hell sein können.

Die Grenzspannung $V_{g1}$ und $V_{g2}$ lassen sich durch Beobachtungen unter einem Mikroskop äusserst genau bestimmen. Dazu wird die angelegte Betriebsspannung von 0 V an langsam erhöht. In dem Gebiet zwischen den Grenzspannungen $V_{g1}$ und $V_{g2}$ treten streifenförmige optische Erscheinungen auf, die unmittelbar verschwinden, sobald die Betriebsspannung oberhalb der ersten Grenzspannung $V_{g1}$ oder unterhalb der zweiten Grenzspannung $V_{g2}$ liegt. Es gibt aber auch Flüssigkristallmischungen mit Hystereseverhalten, bei denen die soeben erwähnten streifenförmigen optischen Erscheinungen nicht auftreten. Dann fallen $V_{g1}$ und $V_{g2}$ zu einer Grenzspannung zusammen, unterhalb derer der eine optische Zustand und oberhalb derer der andere optische Zustand stabil ist.

Die prinzipielle Wirkungsweise des erfindungsgemässen Verfahrens soll zunächst anhand einer stark vereinfachten Flüssigkristallanzeige erläutert werden. In Fig. 2 sind mit A und B zwei gleichartig aufgebaute Flüssigkristallzellen bezeichnet.

Die Zelle A liegt an einer Spannung $V_1$ und die Zelle B an der Spannung $V_2$. $V_1$ und $V_2$ entsprechen dabei den Betriebsspannungen, wie sie mit Fig. 1 definiert wurden. Durch einen doppelten Umschalter U (Taster) lassen sich beide Flüssigkristallzellen A, B mit einer Spannung $V_s$ beaufschlagen, wobei die Spannung $V_s$ so gross ist, dass sie rechts von der Hystereseschleife (Fig. 1) liegt ("erstes Ansteuerverfahren"). $V_s$ wird vorzugsweise an beide Zellen A, B angelegt. Danach wird der Umschalter U in die dargestellte Position zurückgeschaltet. Nun weisen beide Zellen A, B die optischen Zustände Z1, Z1' (Fig. 1) auf. Die Zelle B befindet sich im metastabilen optischen Zustand (Punkt Z1' in Fig. 1). Je nach Höhe der Spannungsdifferenz $Vg_2 - V_2$ geht dieser metastabile Zustand mehr oder weniger rasch und ohne äusseres Zutun in den stabilen Zustand (Punkt Z2 in Fig. 1) über, während die Zelle A in dem stabilen Zustand Z1 bleibt.

Wie vorstehend dargelegt ist der Zustandswechsel in Zelle B zeitlich von der Spannungsdifferenz $V_{g2} - V_2$ abhängig. Je näher $V_2$ an $V_{g2}$ liegt, desto langsamer erfolgt der Uebergang von Punkt Z1' nach Punkt Z2.

Die Schreibspannung $V_s$ kann auch links von der Hystereseschleife (Fig. 1) liegen ("zweites Ansteuerverfahren") und vorzugsweise 0 V betragen. $V_s$ = 0 V wird vorzugsweise während 100 ms an beide Zellen angelegt. Danach wird der Umschalter U wieder in seine Ausgangsposition zurückgeschaltet. Nun weisen beide Zellen A, B die optischen Zustände Z2, Z2' (Fig. 1) auf.

Die Zelle A befindet sich im metastabilen optischen Zustand (Punkt Z2' in Fig. 1). Je nach Höhe der Spannungsdifferenz $V_1 - V_{g1}$ geht dieser metastabile Zustand mehr oder weniger rasch und ohne äusseres Zutun in den

stabilen Zustand (Punkt Z1 in Fig. 1) über, während die Zelle B in dem stabilen Zustand Z2 bleibt.

Wie vorstehend dargelegt, ist der Zustandswechsel in Zelle A zeitlich von der Höhe der Spannungsdifferenz $Vg_1 - V_1$ abhängig. Je näher $V_1$ an $V_{g1}$ liegt, desto langsamer erfolgt der Uebergang von Punkt Z2' nach Punkt Z1.

Beim für Flüssigkristallanzeigen üblichen Multiplexbetrieb ist man in der Wahl der Betriebsspannungen $V_1$ und $V_2$ nicht frei. Durch Vorgabe des Multiplexgrades ist das Verhältnis $V_1/V_2$ festgelegt und nähert sich mit zunehmendem Multiplexgrad dem Wert 1 (vgl. IEEE Trans. on El. Dev. Vol. ED 21, No.- 2, Februar 1974, Seiten 146-155).

Im vorliegenden Fall bedeutet dies, dass nur $V_1$ oder nur $V_2$ frei gewählt werden kann. Bei dem ersten Ansteuerverfahren ($V_s \gg V_1$) wird die Betriebsspannung $V_1$ möglichst nach $V_{g1}$ gelegt. Bei dem zweiten Ansteuerverfahren ($V_s \ll V_2$) liegt $V_2$ möglichst nache bei $V_{g2}$.

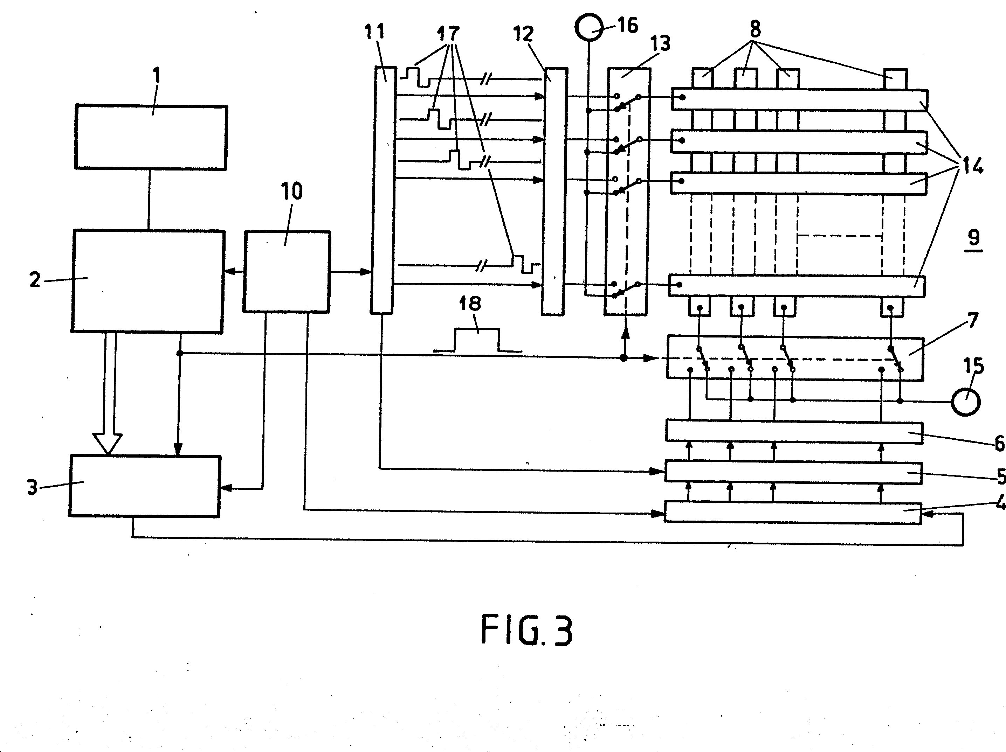

Figur 3 zeigt ein Blockschaltbild zur Durchführung des erfindungsgemässen Ansteuerverfahrens einer Punktmatrix-Flüssigkristallanzeige 9. Dazu ist eine Eingabestelle 1, z.B. ein Telefon mit Modem, an eine Speichereinheit 2 angeschlossen. Ein Zwischenspeicher 3 ist mit der Speichereinheit 2 verbunden. Der Zwischenspeicher 3 ist mit einem Schieberegister 4 verbunden, das seinerseits mit einem Zeilenspeicher 5 und einem Spalten-Treiber 6 verknüpft ist. Die Ausgänge des Spalten-Treibers 6 sind über eine erste Schalteinheit 7 mit den Spaltenelektroden 8 der Punktmatrix-Flüssigkristallanzeige 9 verbunden. Ein Taktgenerator 10 ist mit der Speichereinheit 2, dem Zwischenspeicher 3, dem Schieberegister 4 und einem Pulsgenerator 11, der zeitlich verschobene Impulssignale 17 erzeugt, verknüpft. Der Impulsgenerator 11 ist mit einem Zeilen-Treiber 12, dessen Ausgänge über eine zweite Schalteinheit 13 mit den Zeilenelektroden 14 verbunden sind.
Die Schalteinheiten 7 und 13 bestehen aus mehreren Umschaltern, die synchron mit einem Schreibspannungspuls 18 geschaltet werden, der von der Speichereinheit 2 erzeugt
wird. Die Schalteinheit 7 ist weiterhin mit einer Spannungsquelle 15, die Schalteinheit 13 mit einer Spannungsquelle
16 verbunden. Die Schalteinheiten 7 und 13 bestehen bevorzugt aus Halbleiterschaltern, wie beispielsweise CMOS-
Transistoren. Selbstverständlich können das Schieberegister 4, der Zeilenspeicher 5, der Spaltentreiber 6 und
die Schalteinheit 7 als integrierter Baustein angeordnet
sein. Analoges gilt für den Impulsgenerator 11, den Zeilen-
Treiber 12 und die Schalteinheit 13.

Die Schaltungsanordnung nach Fig. 3 ist besonders zweckmässig für das erfindungsgemässe Ansteuerverfahren. Die Daten
werden über die Eingabestelle 1 in der Speichereinheit
2 seitenweise gespeichert. Die nächste anzuzeigende Seite
wird dann in den Zwischenspeicher 3 gespeichert. Um diese
Information auf der Anzeige darzustellen, wird zuerst
ein Schreibspannungsimpuls von ca. 30 ms Dauer auf die
Schalteinheiten 17 und 13 gegeben, so dass die Spannungsquelle 16 mit allen Zeilenelektroden 14 verbunden ist
und die Spannungsquelle 15 mit allen Spaltenelektroden 8.

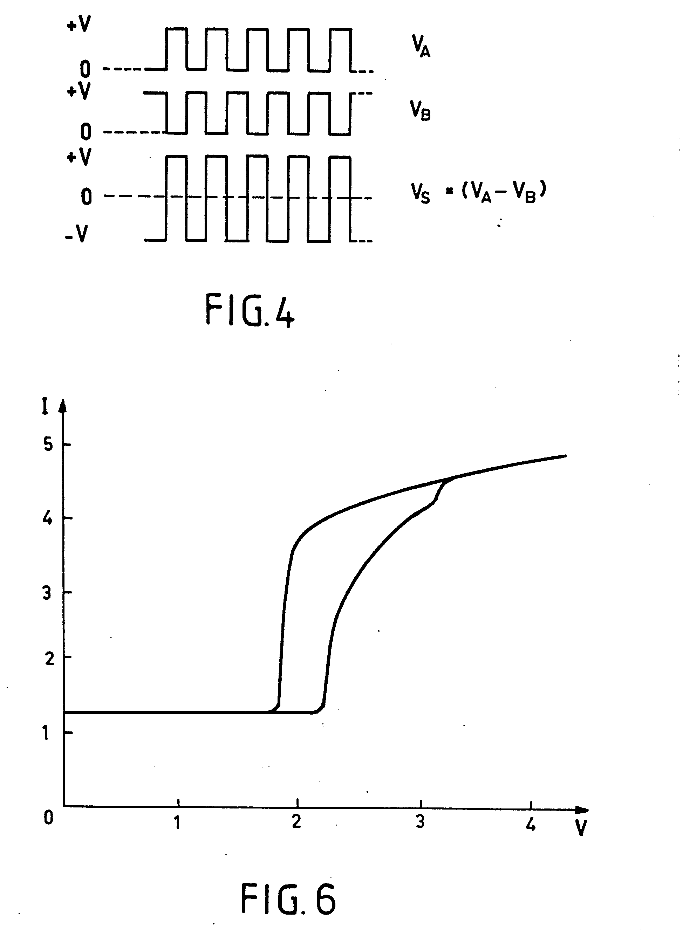

Wird das erste Ansteuerverfahren angewendet, so liefert
z.B. die Spannungsquelle 15 die in Fig. 4 dargestellte
Rechteckspannung $V_A$ und die Spannungsquelle 16 die Rechteckspannung $V_B$. Sie sind zeitlich verschoben, so dass
über jedes Anzeigeelement der Flüssigkristallanzeige 9
die Schreibspannung $V_s$ anliegt. Die Schreibspannung $V_s$
ist eine Wechselspannung, um die Zersetzung des Flüssigkristalls zu vermeiden.
Beim zweiten Ansteuerverfahren sind keine Spannungsquellen
15, 16 nötig. Die zu den Spannungsquellen führenden Leitungen sind mit der Masse verbunden, so dass die Schreibspannung $V_s$ gleich Null ist.

Unmittelbar nach dem Schreibspannungsimpuls werden die gespeicherten Zeilen der Seite vom Zwischenspeicher 3 in das Schieberegister 4 geschoben. Die Seite wird dann nach dem üblichen Zeitmultiplexverfahren geschrieben. Dazu werden zeitlich verschobene Impulssignale benötigt, die vom Impulsgenerator 11 geliefert werden. Diese Signale werden dem Zeilen-Treiber 12 zugeführt, so dass über die Anzeigeelemente einer Matrixzeile die gewünschten Betriebsspannungen liegen (vgl. "Elektroniker", CH Nr. 2/1980, Seiten EL1 - EL5). Damit wird die Anzeige nach dem oben verdeutlichten Verfahren geschrieben. Mit Hilfe des Taktgenerators 10 wird dafür Sorge getragen, dass die verschiedenen Abläufe in der richtigen Zeitfolge stattfinden.

Die erfindungsgemässe Anzeigezelle nach Fig. 5 besteht aus zwei Trägerplatten 21 und 22 aus Glas mit einer Umrandung 23 und Abstandshaltern 24 aus Glasfasern oder Glaskugeln, wie es bei Drehzellen gebräuchlich ist. Die Dimensionen der Abstandshalter 24 sind so klein, dass sie bei normaler Betrachtung der Anzeige nicht wahrgenommen werden. Die verwendeten Glasfasern haben einen Durchmesser von 8 µm und eine maximale Länge von 200 µm. Bei Glaskugeln ist der Durchmesser 8 um. Die Abstandhalter 24 sind mit einer Anzahl von 2 bis 10 pro $mm^2$ über die Anzeigefläche verteilt. Auf die Trägerplatten 21 und 22 sind transparente Elektrodenschichten 25 und 26 und Orientierungsschichten 27 und 28 aufgetragen. Die letzteren sind durch schräges Aufdampfen zu einer 10 nm dicken SiO-Schicht unter einem Einfallswinkel von 5° erzeugt. Die Flüssigkristallmoleküle erhalten dann eine Kippwinkel $\alpha$ der optischen Achse von 28° mit der Plattenoberfläche. Die Trägerplatten 21 und 22 sind in der Zelle so zusammengestellt, dass die Orientierungsschichten 27 und 28 antiparallel zueinander stehen. Die optischen Achsen der Flüssigkristallmoleküle an den oberen und unteren Trägerplatten 21 und 22 sind deshalb parallel. Die Zelle wird reflektiv betrieben und besitzt dazu einen internen Reflektor 29 aus Aluminiumpigmenten auf der Elektrodenschicht 26 der unteren Trägerplatte 22, wie z.B. aus DE-A-26 29 765 bekannt ist. Es versteht sich, dass auch der wohl bekannte externe Reflektor dazu sehr geeignet ist. Als Gast-Wirt-Flüssigkristall 30 ist eine Mischung von 98,25 Gewichts-% der schwarzen Gast-Wirt-Mischung ZLI 1841 der Firma Merck, BRD, mit einem rechtsdrehenden chiralen Zusatz von 1,75 Gewichts-% CB 15 der Firma British Drug House, England, in die Zelle eingefüllt. Die interne Schraubensteigung der Mischung ist dann 7,03 $\mu$m und die cholesterische Wendel macht eine volle Drehung in der Zelle. Die Zelle besitzt eine Punktmatrixanzeige mit 45 cm$^2$ Anzeigefläche und 35 Zeilen, und die Flüssigkristallschicht hat eine Dicke d von 8,1 $\pm$ 0,2 $\mu$m. Das Verhältnis von Dicke d zu Ganghöhe p beträgt daher 1,15.

In einem anderen Beispiel wurde eine Mischung der schwarzen Flüssigkristallmischung ZLI 1841, 2,14 Gewichts-% des linksdrehenden chiralen Zusatzes Cholesterin Nonanoat und 0,61 Gewichts-% eines blauen Anthrachinon-Farbstoffes in die Zelle eingefüllt. Die Ganghöhe p ist hier 11,7 $\mu$m und das Verhältnis von Schichtdicke zu Ganghöhe beträgt dann 0,69. In diesem Fall stehen die Orientierungsrichtungen der Orientierungsschichten 27 und 28 senkrecht zueinander, so dass eine Verdrehung des Flüssigkristalls von 270° entsteht. Dabei ist zu beachten, dass die Anordnung der Orientierungsschichten 27 und 28 mit dem Drehsinn des chiralen Zusatzes übereinstimmt. Es hat sich herausgestellt, dass ebenfalls ausgezeichnete Resultate erreicht werden mit einer Zelle, bei der eine Orientierungsschicht schräg aufgedampft ist und die andere Orientierungsschicht aus einer geriebenen Polymerschicht oder dergleichen besteht.

Offensichtlich genügt es, wenn nur eine Orientierungsschicht den Flüssigkristallmolekülen an ihrer Oberfläche eine Vorverkippung von 5° oder grösser aufprägt.

Die 35 Zeilen können nach dem erfindungsgemässen Verfahren mit sehr gutem Kontrast zur Anzeige gebracht werden, wobei das Umschalten der Anzeige bei Informationswechsel kaum störend wirkt und keinerlei Flackererscheinungen auftreten.

Die gemessene Helligkeits-Spannungskurve der ersten Zelle ist in Fig. 6 gezeigt, und wurde aufgenommen bei einer Abtastrate von 30 mV/s und bei einer Temperatur von 20 °C. Auf der X-Achse ist die angelegte Betriebsspannung V in Volt aufgezeichnet, auf Y-Achse die Helligkeit I in willkürlichen Einheiten.

In Fig. 7 ist die minimale Schreibzeit bei den verschiedenen Betriebsspannungen der ersten Zelle aufgezeichnet. Die X-Achse bezeichnet die angelegte Betriebsspannung V in Volt, die Y-Achse die minimale Schreibzeit t in Sekunden (logarithmische Skala). Die Kurve C zeigt die minimale Schreibzeit des zweiten optischen Zustandes (dunkel). Die Kurve D zeigt die minimale Schreibzeit des ersten optischen Zustandes (hell).

Zur Bestimmung der minimalen Schreibzeit des zweiten optischen Zustandes (Kurve C) wird ein Schreibspannungsimpuls $V_s$ von 8,0 Volt und 21 ms Impulsdauer angelegt. Die betreffende minimale Schreibzeit bei der angelegten Betriebsspannung ist dann die Zeit, die verläuft, bis 90 % der Intensität des zeiten optischen Zustandes (dunkel) erreicht ist. In Figur 7 ist dazu noch die Schreibspannungsimpulsdauer von 21 ms addiert, so dass eigentlich die für das Schreiben der Anzeige massgebende Zeit - die effektive Schreibzeit - auf der Y-Achse dargestellt ist. Bei dieser Anzeigezelle lässt sich die erste Betriebsspannung $V_1$,

0106386
112/83

die gleich der ersten Grenzspannung $V_{g1}$ ist, leicht zu 2,15 Volt bestimmen. Wenn eine bestimmte minimale Schreibzeit verlangt wird, ergibt sich die maximale Anzahl N der zu schreibenden Zeilen einfach anhand der Formel

$$\frac{V_1}{V_2} = \sqrt{\frac{\sqrt{N} + 1}{\sqrt{N} - 1}}$$

aus dem genannten Artikel in IEEE Trans. on El. Dev. Bei einer minimalen Schreibzeit von beispielsweise einer Sekunde folgt aus Fig. 7 für die Betriebsspannung $V_2 = 1,82$ Volt, so dass maximal 37 Zeilen nach dem erfindungsgemässen Verfahren angesteuert werden können.

Zur Bestimmung der minimalen Schreibzeit des ersten optischen Zustandes (Kurve D) wird ein Schreibspannungspuls von 0 Volt und 100 ms Pulsdauer angelegt. Analoge Ueberlegungen wie für den Fall der Kurve C gelten auch hier. Bei der oben erwähnten Anzeigezelle sind die zweite Grenzspannung $V_{g2}$ - und somit die zweite Betriebsspannung $V_2$ - und die erste Grenzspannung $V_{g1}$ gleich, und zwar 2,15 Volt. Wird in diesem Fall eine minimale Schreibzeit von einer Sekunde verlangt, dann ist die erste Betriebsspannung 2,48 Volt, so dass maximal 50 Zeilen nach dem erfindungsgemässen Verfahren angesteuert werden können.

Die Messdaten der erfindungsgemässen zweiten Zelle bei einem Multiplexgrad von 96 und einer Temperatur von 298 K sind folgende:

- erste Betriebsspannung $V_1 = 1,80$ Volt
- zweite Betriebsspannung $V_2 = 1,63$ Volt
- Amplitude der Datenspannung 1,21 Volt
- Amplitude des Strobe-Signals 11,88 Volt
- Kontrastverhältnis 2,1 : 1

- Summen der Ein- und Ausschaltzeiten                    650 nsec bei einer Schreib-
                                spannung von 8 Volt
                                während 20 msec

                                2 sec bei normalem Multiplex


Um einen genügend hohen Multiplexgrad zu gewährleisten, ist es erforderlich, dass die cholesterinische Wendel in der Zelle so klein als möglich ist. Auf der anderen Seite sollte der Flüssigkristall im nicht-angesteuerten Zustand das eingestrahlte Licht möglichst vollständig absorbieren, so dass keine Polarisatoren mehr benötigt werden. Diese Bedingungen sind in dem erfindungsgemässen Erfordernis gewährleistet, das eine Schichtdicke des Flüssigkristalls kleiner als 10 $\mu$m, ein Verhältnis von Zellendicke d zu Ganghöhe p des Gast-Wirt-Flüssigkristalls grösser oder gleich 0,5 und kleiner 1,75 beinhaltet, wobei die Verdrehung der Flüssigkristallmoleküle in der ganzen Zelle zwischen 180° und 630° liegt, vorzugsweise zwischen 200° und 400°.


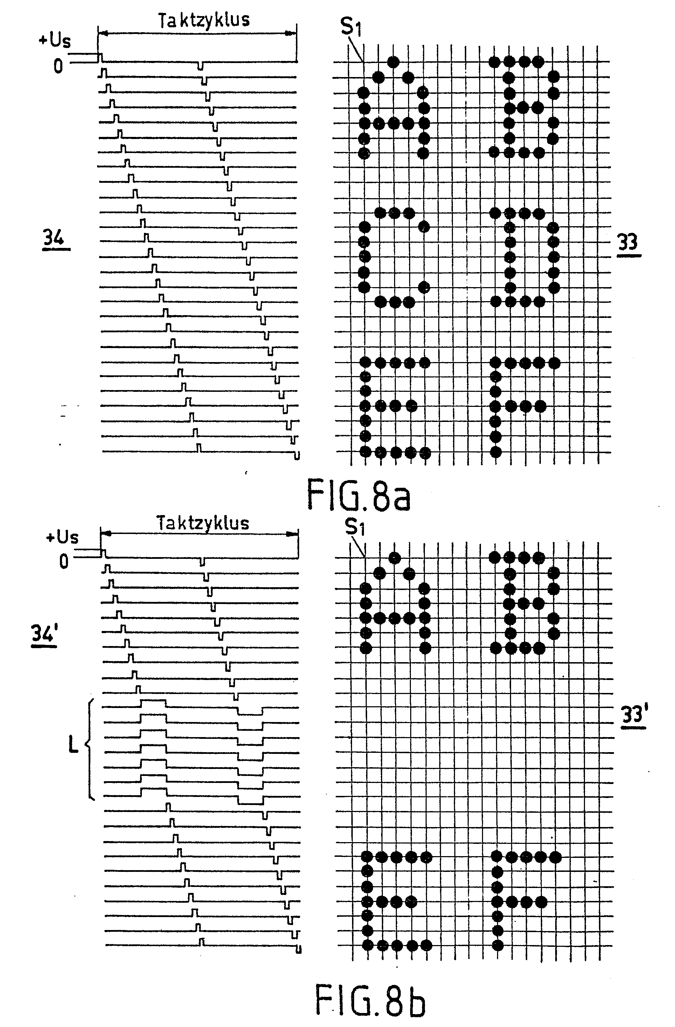

Anhand der Figuren 8 und 9 soll nun eine Weiterbildung des erfindungsgemässen Ansteuerverfahrens gemäss Anspruch 2 näher erläutert werden. Dabei zeigen die Figuren 8a, 8b und 8c den Informationswechsel der zweiten Schriftzeile bei einer Punktmatrixanzeige 33, 33', 33" mit 27 Matrixzeilen. Jede Schriftzeile wird von 7 Matrixzeilen gebildet, und dazwischen befindet sich jeweils eine Leerzeile aus 3 Matrixzeilen. Die alphanumerischen Zeichen selber sind in einem Format von 5 x 7 Matrixpunkten dargestellt. Links von den Anzeigen 33, 33', 33" sind an die einzelnen Matrixzeilen angelegte Taktsignale 34, 34', 34" abgebildet. Der Taktzyklus beträgt 27 ms, die Wiederholungsfrequenz 37,04 Hz. Die Breite eines Taktsignals ist 0,5 ms, seine Amplitude ist mit $U_s$ bezeichnet. Zu den Figuren 8a, 8b und 8c gehörende Datensignale 35, 35', 35" der ersten Matrixspalte S1 sind aus Fig. 4 ersichtlich. Der Taktzyklus beträgt auch hier 27 ms, so dass im Falle der Figuren 8a und 8c das übliche Multiplexverfahren nach der obengenannten Schrift IEEE erhalten wird. Die jeweilige Betriebsspannung $V_1$, $V_2$ (vgl. Fig. 1) an einem punktförmigen Anzeigeelement wird dann vom quadratischen Mittelwert der Differenz zwischen dem Taktsignal 34, 34" und dem Datensignal 35, 35" gebildet. Dabei liegen die ausgewählten Anzeigeelemente (hell) an der Betriebsspannung $V_1$ und die nicht ausgewählten (dunkel) an der Betriebsspannung $V_2$. Soll nun eine neue Schriftzeile geschrieben werden, so muss zuerst die alte Information gelöscht werden (Fig. 8b). Dazu wird die Anzeige in ein Haltegebiet und ein Schreibgebiet unterteilt. Den Anzeigeelementen des Haltegebietes werden weiterhin derartige Multiplexsignale zugeführt, dass die Betriebsspannung $V_1$ oder $V_2$ anliegt. Die Anzeigeelemente des Schreibgebietes dagegen werden an die Schreibspannung $V_s$ gelegt. Dazu erhalten alle Matrixzeilen der neu zu schreibenden Schriftzeile die gleichen Schreibsignale S, deren Amplitude mit $U_h$ bezeichnet ist und deren Impulsbreite 3,5 ms beträgt. Synchron dazu werden die Datensignale derart modifiziert, dass die effektive Spannung an den Anzeigeelementen gleich der Schreibspannung $V_s$ ist. Ein solches, modifiziertes Datensignal 35' ist für die erste Matrixspalte $S_1$ in Fig. 9 dargestellt. Auf diese Art bleibt die Information der ersten und der dritten Schriftzeile (Buchstaben AB, EF) erhalten, und wird die Information der zweiten Schriftzeile geänder (von CD in XY).

Die Abtastsignale 34, 34', 34" und die Datensignale 35, 35', 35" sind nach einem halben Abtastzyklus invertiert, um mittlere Gleichspannungen an den Zeilen- oder Spaltenelektroden zu verhindern. Diese Gleichspannungen würden sonst den Flüssigkristall allmählich elektrochemisch zersetzen. Das Verhältnis zwischen den Betriebsspannungen ergibt sich nach dem obengenannten Artikel IEEE zu

$$\frac{V_1}{V_2} = \sqrt{\frac{\sqrt{N} + 1}{\sqrt{N} - 1}} \; . \tag{1}$$

Das Verhältnis zwischen der Schreibspannung $V_s$ und der Betriebsspannung $V_2$ lässt sich anhand der oben erwähnten Signale berechnen zu:

$$\frac{V_s}{V_2} = \frac{1}{\sqrt{2}} \sqrt{\frac{n \sqrt{N} x^2 + 2nx + \sqrt{N}}{\sqrt{N} - 1}} \; , \tag{2}$$

mit $\quad x = \dfrac{U_h}{U_s}$ ,

$n$ = Anzahl der neu zu schreibenden Matrixzeilen,

$N$ = Anzahl der Matrixzeilen.

Die technische Verwirklichung der Ansteuerung wird besonders einfach, für $x = 1$, d.h. $U_h = U_s$. Für das dargestellte Beispiel ($N = 27$, $n = 7$) ist $V_1/V_2 = 1,215$ und $V_s/V_2 = 2,573$. Die Schreibspannung $V_s$ liegt deshalb bestimmt ausserhalb der Hystereseschleife. Jedoch für eine Matrixanzeige mit mehr Matrixzeilen $N$ oder weniger neu zu schreibende Matrixzeilen $n$ kann es notwendig werden, $x$ grösser als 1 zu wählen, damit das Verhältnis $V_s/V_2$ genügend gross bleibt.

Wenn das bei Fig. 2 erläuterte zweite Ansteuerverfahren angewandt wird, soll die Schreibspannung $V_s'$ links von der Hystereseschleife liegen (Fig. 1). In diesem Falle ist $U_h = 0$ und errechnet sich das Verhältnis $V_s'/V_2$ zu:

$$\frac{V_s'}{V_2} = \frac{1}{\sqrt{2}} \sqrt{\frac{\sqrt{N}}{\sqrt{N} - 1}} \tag{3}$$

Für das obige Beispiel ($N = 27$, $n = 7$) ist $V_s'/V_2 = 0,787$.

Eine beispielhafte Schaltungsanordnung für das erfindungsgemässe Ansteuerverfahren ist aus Fig. 10 ersichtlich.
In Fig. 10a ist ein Teil der unteren Trägerplatte mit
Zeilenelektroden 36 dargestellt, die entweder direkt
oder über einen CMOS-Schalter 38 mit einem Impulsgenerator 37 elektrisch verbunden sind. In Fig. 10b ist
ein Teil der oberen Trägerplatte mit Spaltenelektroden
39 dargestellt, die über einen CMOS-Schalter 40 mit
einem Datengenerator 11 elektrisch verbunden sind. Die
Trägerplatten bilden mit einer Umrandung und Abstandshaltern eine übliche Anzeigezelle wie in Fig. 5, in
die ein cholesterinischer Flüssigkristall eingefüllt
ist. Gehören nun die sieben Zeilenelektroden 36 der
oberen Schriftzeile zum Haltegebiet, so verbindet der
CMOS-Schalter 38 die Zeilenelektroden 36 mit dem Impulsgenerator 37, wodurch sie die anhand der Fig. 8 erklärten
Abtastsignale $P_1$, $P_2$, ... erhalten. Das erste Abtastsignal
$P_1$ mit einem Abtastzyklus von 27 ms ist nochmals in
Fig. 11 abgebildet. Gleichzeitig sind auch die Spaltenelektroden 39 über den CMOS-Schalter 40 mit dem Datengenerator 41 verbunden, so dass ähnliche Datensignale
anliegen wie die Signale 35" in Fig. 4. Wird nun die
obere Schriftzeile zum Schreibgebiet erklärt, so wird
der CMOS-Schalter 38 mit einem Spannungsimpuls von 81 ms
(drei Taktzyklen) umgeschaltet, und an allen Zeilenelektroden 38 der Schriftzeile liegt das Schreibsignal $U_x$
an. Die Schreibsignale ($U_x$, $U_y$ und $U_z$ für die drei Schriftzeilen mit den Buchstaben AB, CD (XY), EF sind in Fig.
11 dargestellt (vgl. auch Fig. 8b). Das Schreibsignal
$U_x$ steuert gleichzeitig den CMOS-Schalter 40, so dass
während dessen Impulsdauer (3,5 ms) das Impulssignal
$U_e$ der Fig. 11 an den Spaltenelektroden 39 anliegt.
Dadurch werden die Datensignale ähnlich modifiziert
wie das Datensignal 35' in Fig. 9.

Der Vorteil dieser Ausführungsform besteht darin, dass
alle Takt- und Datensignale die gleiche Amplitude besitzen.

Die benötigte Spannungsquelle und die zugehörigen logischen
Schaltungen können deshalb besonders einfach gestaltet
werden.

In an sich bekannter Weise können jedoch die Amplituden
der angelegten Signale unterschiedlich sein; z.B. kann
die Amplitude des Schreibsignals $U_h$ wesentlich höher gewählt
werden als die Amplitude der Taktsignale $U_s$ und der Datensignale $U_d$.

P a t e n t a n s p r ü c h e

1. Verfahren zur Ansteuerung einer multiplexierbaren, bistabilen Flüssigkristallanzeige mit mehreren Flüssigkristall-Anzeigeelementen, die einen ersten und zweiten optischen Zustand (Z1, Z2) aufweisen können, mit folgenden Merkmalen:

a) wenn ein Flüssigkristall-Anzeigeelement in den ersten optischen Zustand (Z1) gebracht werden soll, so wird an das Flüssigkristall-Anzeigeelement zunächst kurzzeitig eine Schreibspannung ($V_s'$) gelegt,

b) wenn ein Flüssigkristall-Anzeigeelement in den zweiten optischen Zustand (Z2) gebracht werden soll, so wird an das Flüssigkristall-Anzeigeelement zunächst ebenfalls kurzzeitig diese Schreibspannung ($V_s'$) angelegt,

c) danach wird an das Flüssigkristall-Anzeigeelement, das auf den ersten optischen Zustand gebracht oder dort bleiben soll, eine erste Betriebsspannung ($V_1$) angelegt, die grösser ist als eine erste Grenzspannung ($V_{g1}$), oberhalb derer der zweite optische Zustand (Z2) spontan in den ersten übergeht,

d) an das Flüssigkristall-Anzeigeelement wird, wenn es in den zweiten optischen Zustand (Z2) versetzt werden soll, eine zweite Betriebsspannung ($V_2$) ange-legt, die kleiner ist als eine zweite Grenzspannung ($V_{g2}$), die ihrerseits kleiner oder gleich gross ist wie die erste Grenzspannung ($V_{g1}$), wobei unterhalb der zweiten Grenzspannung der erste optische Zustand (Z1) spontan in den zweiten (Z2) übergeht, wobei das Merkmal a) den Oberbegriff und die übrigen Merkmale den kennzeichnenden Teil bilden.

2. Verfahren nach Anspruch 1, dadurch gekennzeichnet,

    a) dass Anzeigeelemente bei vorzunehmenden Aenderungen in Schreibgebiete unterteilt werden, in denen Aenderungen des optischen Zustandes der Flüssigkristall-Anzeigeelemente vorgenommen werden sollen und

    b) in Haltegebiete, in denen keine Aenderungen des optischen Zustandes der Flüssigkristall-Anzeigeelemente vorgenommen werden sollen, und

    c) dass die Schreibspannung ($V_s$) gleichzeitig an alle Anzeigeelemente der Schreibgebiete angelegt wird.

3. Verfahren nach Anspruch 1 oder 2, dadurch gekennzeichnet, dass die Schreibspannung ($V_s$) grösser ist als die erste Grenzspannung ($V_{g1}$) und dass die erste Betriebsspannung ($V_1$) nahe der ersten Grenzspannung ($V_{g1}$) liegt, und die Spannungsdifferenz zwischen zweiter Grenzspannung ($V_{g2}$) und zweiter Betriebsspannung ($V_2$) in Abhängigkeit vom Multiplexgrad gewählt wird, wobei mit zunehmendem Multiplexgrad das Verhältnis von erster zu zweiter Betriebsspannung gegen 1 geht.

4. Verfahren nach Anspruch 3, dadurch gekennzeichnet, dass die Schreibspannung ($V_s$) mindestens anderthalb mal so gross ist wie die erste Grenzspannung ($V_{g1}$).

5. Verfahren nach Anspruch 1 oder 2, dadurch gekennzeichnet, dass die Schreibspannung ($V_s'$) kleiner ist als die zweite Grenzspannung ($V_{g2}$), dass die zweite Betriebsspannung ($V_2$) nahe der zweiten Grenzspannung ($V_{g2}$) und dass die Spannungsdifferenz zwischen erster Grenzspannung ($V_{g1}$) und erster Betriebsspannung ($V_1$) in Abhängigkeit vom Multiplexgrad gewählt wird, wobei mit zunehmendem Multiplexgrad das Verhältnis von erster zu zweiter Betriebsspannung gegen 1 geht.

6. Verfahren nach Anspruch 5, dadurch gekennzeichnet, dass die Schreibspannung ($V_s'$) 0 V beträgt.

7. Verfahren nach einem der vorangehenden Ansprüche, dadurch gekennzeichnet, dass die Schreibspannung ($V_s$) eine Pulsdauer im Bereich von 5 bis 200 ms aufweist.

8. Verfahren nach einem der vorangehenden Ansprüche, dadurch gekennzeichnet, dass das Verhältnis zwischen der ersten Betriebsspannung ($V_1$) und der zweiten Betriebsspannung ($V_2$) höchstens 3,0 beträgt.

9. Verfahren nach einem der vorangehenden Ansprüche, dadurch gekennzeichnet, dass der Multiplexgrad mindestens 2 beträgt.

10. Flüssigkristallanzeige mit
   - zwei parallelen Trägerplatten (21, 22), die mit einer Umrandung (23) eine Zelle bilden,
   - einem in die Zelle eingefüllten Gast-Wirt-Flüssigkristall (30), der aus einem nematischen Flüssigkristall mit positiver dielektrischer Anisotropie, pleochroitischen Farbstoffen und einem chiralen Zusatz besteht,
   - Elektrodenschichten (25, 26) und Orientierungsschichten (27, 28) auf den Innenseiten der Trägerplatten (21, 22), wobei mindestens eine der Orientierungsschichten (27, 28) den benachbarten Flüssigkristallmolekülen einen Verkippungswinkel ($\alpha$) grösser als 5° mit der Plattenebene aufprägt,
   dadurch gekennzeichnet, dass
   - die Schichtdicke (d) des Flüssigkristalls kleiner als 10 µm ist,
   - der Verkippungswinkel ($\alpha$) kleiner als 40° ist,
   - das Verhältnis von Schichtdicke (d) zur Ganghöhe (p) des Gast-Wirt-Flüssigkristalls grösser oder gleich 0,5 und kleiner als 1,75 ist, wobei die Verdrehung der Flüssigkristallmoleküle in der ganzen Zelle zwischen 180° und 630° liegt,
   - über den ganzen Sichtbereich der Anzeige verteilte Abstandshalter (24) vorgesehen sind.

11. Flüssigkristallanzeige nach Anspruch 10, dadurch gekennzeichnet, dass eine der Orientierungsschichten (27, 28) in einer bestimmten Richtung gerieben ist.

12. Flüssigkristallanzeige nach Anspruch 10 oder 11, dadurch gekennzeichnet, dass die Abstandshalter (24) aus Glasfasern oder Glaskugeln bestehen.

13. Flüssigkristallanzeige nach Anspruch 10, dadurch gekennzeichnet, dass ein Reflektor (29) vorgesehen ist.

14. Flüssigkristallanzeige nach einem der Ansprüche 10 bis 12, dadurch gekennzeichnet, dass ein interner Reflektor (29) mit Aluminiumpigmenten vorgesehen ist.

0106386

FIG:1

FIG.2

FIG. 3

0106386

FIG.4

FIG.6

FIG. 5

FIG. 7

FIG.8a

FIG.8b

FIG.8c

FIG.9

FIG.10a

FIG.10 b

FIG.11